# EUROPÄISCHE PATENTSCHRIFT

(11) **EP 0 651 495 B1**
(45) Veröffentlichungstag und Bekanntmachung des Hinweises auf die Patenterteilung: **27.12.1996**
(21) Anmeldenummer: 94115835.4
(22) Anmeldetag: 07.10.1994
(51) Int. Cl.: H02K 5/22, H01R 13/52, H01R 43/24

(54) **Flüssigkeits- und gasdichte Leitungsdurchführung**
Liquid and gas tight cable lead-through
Traversée de câbles imperméable aux liquides et aux gaz

(30) Priorität: 28.10.1993 DE 4336851
(43) Veröffentlichungstag der Anmeldung: 03.05.1995
(73) Patentinhaber: KSB Aktiengesellschaft, 67227 Frankenthal (DE)
(72) Erfinder: Aschenbach, Frank, D-06184 Zwintschöna (DE)

(56) Entgegenhaltungen:
- DE-A- 1 465 779
- DE-A- 2 000 483
- DE-A- 3 412 786
- DE-B- 1 165 120
- US-A- 3 294 993
- US-A- 4 626 721
- US-A- 4 851 725

## Beschreibung

Gegenstand der Erfindung ist eine Flüssigkeits- und gasdichte Durchführung einer mehradrigen elektrischen Leitung durch die Wand eines durch einen Elektromotor angetriebenen Kreiselpumpenaggregates, wobei die Isolation jeder einzelnen der über Distanzscheiben geführten Leitungsadern teilweise entfernt ist und die Leitungsadern einschließlich der freiliegenden Litzen in einem Körper aus einem gießbaren, selbst aushärtenden Isolationsmaterial eingebettet sind.

Eine derartige Leitungsdurchführung ist bekannt aus der DE-OS 14 65 779. Wesentlich für diese vorbekannte Ausführung ist, daß die Isolation der über einen Gießharzkörper geführten Leitungsadern auf etwa einem Drittel der Gesamtlänge der Einbettung entfernt ist. Zur Herstellung einer Längswasserdichtheit müssen die freiliegenden Litzen verlötet werden. Durch mehrere Distanzscheiben werden die einzelnen Leitungsadern vor der Herstellung des Gießkörpers in einem gleichmäßigen Abstand zueinander gehalten.

Die bekannte Leitungsdurchführung ist sehr zuverlässig. Allerdings erfordern die Entfernung der Isolationen und das Verlöten der freigelegten Litzen wegen der schlechten Zugänglichkeit innerhalb des laufenden Kabels einen erheblichen Aufwand.

Der Erfindung liegt die Aufgabe zugrunde, den für die Herstellung einer flüssigkeits- und gasdichten Durchführung der eingangs genannten Art zu treibenden Aufwand zu verringern.

Die gestellte Aufgabe wird erfindungsgemäß dadurch gelöst, daß die Isolationen nur an den Enden der Leitungsadern entfernt und die dort freiliegenden Litzen jeweils mit einem Steckverbinder versehen sind, wobei die mit den Litzen verbundenen Enden der Steckverbinder gemeinsam mit einer sie halternden Distanzscheibe innerhalb des Körpers aus Isolationsmaterial angeordnet sind.

Der Vorteil der erfindungsgemäßen Lösung liegt darin, daß wegen der guten Zugänglichkeit der freiliegenden Kabelenden das Entfernen der Isolierung und das Verlöten, beispielsweise in einem Tauchbad, schnell und wenig aufwendig zu bewerkstelligen sind. Dabei ist ein Verlöten der Kabelenden nicht in jedem Fall erforderlich. Oft kann auch darauf verzichtet werden.

Die Verwendung von Steckverbindern, die in Form von Flach- und Rundsteckern handelsüblich und erprobt sind, eröffnet bei sinnvoller Anordnung, nebeneinanderliegend und in mehreren Reihen oder auf einem Kreis, eine zusätzliche vorteilhafte Möglichkeit: die Bildung einer Steckdose oder eines Steckers, die jeweils mit einem entsprechend ausgestatteten Gegenstück schnell und leicht zu verbinden sind.

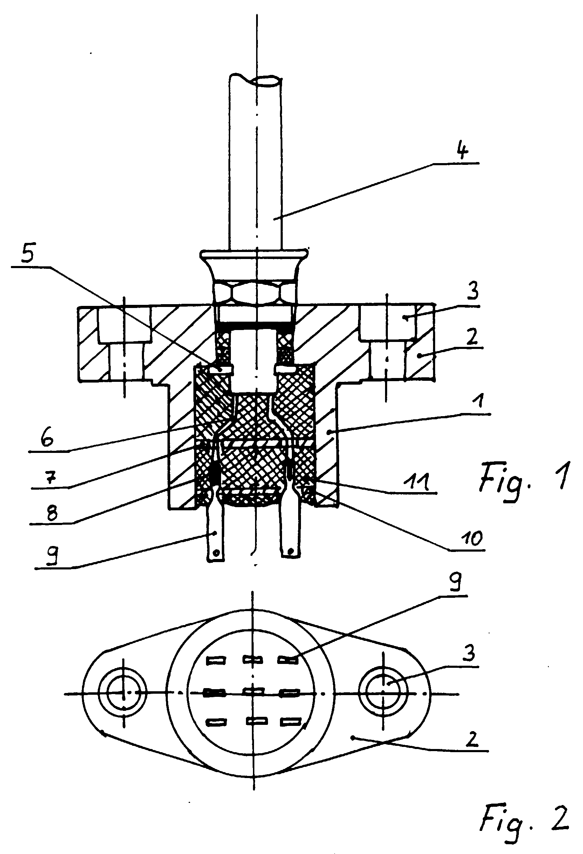

Anhand eines Ausführungsbeispiels wird die Erfindung näher erläutert. Die Zeichnung zeigt in
- Fig. 1: einen Längsschnitt durch eine als Stecker ausgebildete Leitungsdurchführung, und die
- Fig. 2: die Unteransicht der in der Fig. 1 dargestellten Leitungsdurchführung.

Träger der Leitungsdurchführung ist ein aus Metall bestehendes Gehäuse 1, welches mit einem Flansch 2 ausgestattet ist. Bohrungen 3 des Flansches 2 dienen dessen lösbarer Verbindung mit einem hier nicht dargestellten Gehäuse eines Kreiselpumpenaggregates. - In einer alternativen Ausführung hierzu können auch Gehäuse und Flansch als separate Teile ausgeführt sein.

In das Gehäuse 1 ist eine mehradrige elektrische Leitung 4 eingeführt, die durch eine Zugentlastung 5 gesichert wird. Die einzelnen Adern 6 der elektrischen Leitung 4 verlaufen über eine Distanzscheibe 7, durch welche die Adern 6 in einem gleichmäßigen Abstand zueinander gehalten werden.

An ihren Enden 8 sind die Adern 6 von einer sie umgebenden Isolation befreit. In einem Tauchbad wurden die abisolierten Enden 8 längswasserdicht verlötet und anschließend mit Flachsteckverbindern 9 verbunden. Die Flachsteckverbinder 9 sind in einer Distanzscheibe 10 nebeneinander und in Reihen angeordnet. - Die Distanzscheibe 10 ist notwendiger Bestandteil des Erfindungsgegenstandes. Auf die Distanzscheibe 7 kann auch verzichtet werden.

Statt der Flachsteckverbinder 9 können auch Rundsteckverbinder zum Einsatz kommen. - Ein Verlöten der abisolierten Enden 8 ist vielfach nicht erforderlich, oft wird es auch von den Herstellern der Steckverbinder untersagt.

Die Adern 6, die Distanzscheiben 7 und 10 sowie die Enden der Flachsteckverbinder 9 sind in einem Körper 11 aus Gießharz eingebettet, das in einem abschließenden Vorgang in das Gehäuse 1 gegossen wurde.

Der Anordnung der Flachsteckverbinder 9 entspricht eine nicht dargestellte Anordnung der zugehörigen Gegenstücke innerhalb des Gehäuses des Kreiselpumpenaggregates. Somit ergibt sich eine leicht herstellbare und lösbare Steckverbindung. Zur Vermeidung einer Fehlverbindung zwischen dem hier geschilderten Stecker und einer im Aggregatgehäuse befindlichen Steckdose können beide mit formschlüssig zusammenwirkenden Teilen ausgestattet sein, die eine Steckverbindung nur in einer Position erlauben (nicht dargestellt).

## Patentansprüche

1. Flüssigkeits- und gasdichte Durchführung einer mehradrigen elektrischen Leitung (4, 6) durch die Wand eines durch einen Elektromotor angetriebenen Kreiselpumpenaggregates, wobei die Isolation jeder einzelnen der über Distanzscheiben (7, 10) geführten Leitungsadern (6) teilweise entfernt ist und die Leitungsadern (6) einschließlich der freiliegenden Litzen in einem Körper (11) aus einem gießbaren, selbst aushärtenden Isolationsmaterial eingebettet sind, **dadurch gekennzeichnet**, daß die Isolationen nur an den Enden (8) der Leitungsadern (6) entfernt und die dort freiliegenden Litzen jeweils mit einem Steckverbinder (9) versehen sind, wobei die mit den Litzen verbundenen Enden der Steckverbinder (9) gemeinsam mit einer sie halternden Distanzscheibe (10) innerhalb des Körpers (11) aus Isolationsmaterial angeordnet sind.

2. Flüssigkeits- und gasdichte Durchführung nach Anspruch 1, dadurch gekennzeichnet, daß die Steckverbinder (9) nebeneinanderliegend und in mehreren Reihen angeordnet sind.

3. Flüssigkeits- und gasdichte Durchführung nach Anspruch 1, dadurch gekennzeichnet, daß die Steckverbinder (9) auf einem Kreis angeordnet sind.

4. Flüssigkeits- und gasdichte Durchführung nach Anspruch 1, gekennzeichnet durch die Verwendung von Flachsteckverbindern (9).

5. Flüssigkeits- und gasdichte Durchführung nach Anspruch 1, gekennzeichnet durch die Verwendung von Rundsteckern.

6. Flüssigkeits- und gasdichte Durchführung nach Anspruch 1 und einem oder mehreren der Ansprüche 2 bis 5, dadurch gekennzeichnet, daß die Steckverbinder (9) zusammen mit dem sie umgebenden Körper (11) aus Isolationsmaterial eine Steckdose bilden.

7. Flüssigkeits- und gasdichte Durchführung nach den Ansprüchen 2 bis 5, dadurch gekennzeichnet, daß die gesamte Leitungsdurchführung innerhalb eines separaten, über eine lösbare Verbindung mit dem Gehäuse des Kreiselpumpenaggregates und einer dort vorhandenen elektrischen Steckverbindung zu kuppelnden Steckergehäuses (1) angeordnet ist.

8. Flüssigkeits- und gasdichte Durchführung nach Anspruch 6 oder 7, dadurch gekennzeichnet, daß die zu einer Steckdose-Stecker-Verbindung zu kuppelnden Teile mit formschlüssig korrespondierenden, eine Fehlverbindung verhindernden Teilen ausgestattet sind.

9. Flüssigkeits- und gasdichte Durchführung nach Anspruch 7, gekennzeichnet durch ein flanschloses Steckergehäuse, welches mittels eines separaten Flansches mit dem Gehäuse des Kreiselpumpenaggregates zu verbinden ist.

## Claims

1. A liquid- and gas-tight feedthrough for a multiple core electric cable (4 and 6) extending through the wall of an electric motor-driven centrifugal pump unit, the insulation of each individual one of the cable cores (6) guided by spacer washers (7 and 10) being partially stripped and the cable cores (6) including the exposed strands being embedded in a body (11) of a castable, curable insulating material, characterized in that the insulation is only removed at the ends (8) of the cable cores (6) and the strands exposed here are respectively provided with a plug connector (9), the ends of the plug connectors (9) connected with the strands of the plug connector (9) being arranged together with a spacer washer (10) holding them within the body (11) of insulating material.

2. The liquid- and gas-tight feedthrough as claimed in claim 1, characterized in that the plug connectors (9) are arranged adjacent to each other in a plurality of rows.

3. The liquid- and gas-tight feedthrough as claimed in claim 1, characterized in that the plug connectors (9) are arranged in a circle.

4. The liquid- and gas-tight feedthrough as claimed in claim 1, characterized by the use of flat plug connectors (9).

5. The liquid- and gas-tight feedthrough as claimed in claim 1, characterized by the use of round plug connectors (9).

6. The liquid- and gas-tight feedthrough as claimed in claim 1 and any one or more of the claims 2 through 5, characterized in that the plug connectors (9), together with the body (11) surrounding them of insulating material, constitute a plug socket.

7. The liquid- and gas-tight feedthrough as claimed in any one of the claims 2 through 5, characterized in that the entire cable feedthrough is arranged within a separate plug housing (1), which is to be coupled using a releasable connection with the housing of the centrifugal pump unit and an electrical plug connection present there.

8. The liquid- and gas-tight feedthrough as claimed in claim 6 or claim 7, characterized in that the parts to be coupled together as a plug and socket connection are provided with interlocking parts adapted prevent incorrect connection.

9. The liquid- and gas-tight feedthrough as claimed in claim 7, characterized by a flange-less plug housing, which is to be connected with the housing on the centrifugal pump unit.

## Revendications

1. Conduite étanche aux liquides et aux gaz d'un câble électrique (4, 6) multifilaire à travers la paroi d'un agrégat de pompe centrifuge, entraînée par un moteur électrique, conduite dans laquelle l'isolation de chacun des fils conducteurs (6) guidés par des disques d'écartement (7, 10), est en partie ôtée et dans laquelle les fils conducteurs (6), - y compris les torons à découvert - sont encastrés dans un corps (11) fabriqué dans un matériau d'isolation formable et auto-durcissant, **caractérisée** en ce que l'isolation n'est retirée qu'aux extrêmités (8) des conduites électriques (6) et que chacun des torons qui y sont à découvert est muni d'un connecteur multibroches (9), les extrêmités des connecteurs multibroches (9) reliées aux torons étant placées à l'intérieur du corps (11) en matériau isolant conjointement avec un disque d'écartement (10) qui les retient

2. Conduite étanche aux liquides et aux gaz selon la revendication 1 caractérisée en ce que les connecteurs multibroches (9) sont placés les uns à côté des autres en plusieurs rangées.

3. Conduite étanche aux liquides et aux gaz selon la revendication 1 caractérisée en ce que les connecteurs multibroches (9) sont placés sur un cercle.

4. Conduite étanche aux liquides et aux gaz selon la revendication 1 caractérisée en ce qu'on utilise des connecteurs multibroches (9) plats.

5. Conduite étanche aux liquides et aux gaz selon la revendication 1 caractérisée en ce qu'on utilise des connecteurs multibroches ronds.

6. Conduite étanche aux liquides et aux gaz selon la revendication 1 et une ou plusieurs des revendications 2 à 5 caractérisée en ce que les connecteurs multibroches (9) forment avec les corps (11) en matériau isolant qui les entourent une prise de courant.

7. Conduite étanche aux liquides et aux gaz selon les revendications 2 à 5 caractérisée en ce que l'ensemble de la conduite électrique est placée à l'intérieur d'un boîtier de connecteur (1) séparé, à coupler, par une liaison amovible, avec le boîtier de l'agrégat de pompe centrifuge et avec un connecteur électrique placé sur celui-ci.

8. Conduite étanche aux liquides et aux gaz selon les revendications 6 ou 7 caractérisée en ce que les pièces à coupler pour former une liaison prise de courant-connecteur ont des formes qui correspondent entre elles et qui empêchent une erreur de branchement.

9. Conduite étanche aux liquides et aux gaz selon la revendication 7 caractérisée par un boîtier de connection sans bride que l'on relie au boîtier de l'agrégat de pompe centrifuge à l'aide d'une bride séparée.
